# EUROPÄISCHE PATENTSCHRIFT

(11) **EP 1 031 496 B1**
(45) Veröffentlichungstag und Bekanntmachung des Hinweises auf die Patenterteilung: **05.12.2001**
(21) Anmeldenummer: 00101212.9
(22) Anmeldetag: 21.01.2000
(51) Int. Cl.: B62D 29/00

(54) **Halterplatte mit Mitteln zur Fixierung der Funktionsstellung**
Holder-board with means for fixation in an in-use position
Plaque-support avec moyens de fixation dans une position d'utilisation

(30) Priorität: 26.02.1999 DE 19908347
(43) Veröffentlichungstag der Anmeldung: 30.08.2000
(73) Patentinhaber: Möller Plast GmbH, 33649 Bielefeld (DE)
(72) Erfinder: Beckmann, F., Dipl.-Ing., 32120 Hiddenhausen (DE); Bünte, Uwe, 49565 Bramsche (DE); Elsner, Michael, 33803 Steinhagen (DE)
(74) Vertreter: Schirmer, Siegfried, Dipl.-Ing.

(56) Entgegenhaltungen:
- EP-A- 0 730 999
- WO-A-95/25005
- PATENT ABSTRACTS OF JAPAN vol. 1998, no. 06, 30. April 1998 (1998-04-30) & JP 10 053156 A (NEOX LAB:KK), 24. Februar 1998 (1998-02-24)

## Beschreibung

Die Erfindung betrifft eine Halterplatte mit Mitteln zur Fixierung der Funktionsstellung, vorzugsweise zur Fixierung im Innenbereich der Hohlraumstruktur von Kraftfahrzeugen, wobei die Halterplatte zwei im Abstand zueinander verlaufende Einzelplatten aufweist und der gebildete Hohlraum durch ein schaumfähiges Material ausgefüllt ist.

Bei der Herstellung von Halterplatten, die aus zwei oder mehreren Werkstoffen bestehen und bei denen ein Material vollflächig oder in Teilbereichen zwischen zwei Platten eingekapselt werden muß ergibt sich das Problem, daß die einstückige Herstellung dieser Halterplatten ein aufwendiges Produktionswerkzeug erfordert und die geometrische Gestaltung der Halterplatte aufgrund der Lage im Werkzeug eingeschränkt ist. Zur Fixierung der kompletten Halterplatte, z. B. im Innenbereich der Hohlraumstrukturen von Automobilen, werden darüber hinaus Rast- oder Clipsverbindungen oder sonstige Befestigungselemente benötigt, die zusätzlich den Werkzeugaufwand erhöhen. Bei einer einstückigen Herstellung der Halterplatten mit Rastverbindung besteht zwangsläufig die Notwendigkeit, Halterplatten und Befestigung aus dem gleichen Material herzustellen, wodurch der Bereich mit der höchsten Materialbeanspruchung die Materialqualität bestimmt.

Der Erfindung liegt die Aufgabe zugrunde, eine Halterplatte mit Mitteln zur Fixierung der Funktionsstellung so auszubilden, daß mit einer einfachen Werkzeugausbildung und wesentlich schneller und damit kostengünstiger eine Herstellung möglich ist.

Diese Aufgabe wird erfindungsgemäß dadurch gelöst, daß die Einzelplatten der Halterplatte durch ein Filmscharnier miteinander verbunden sind und zur Fixierung der Funktionsstellung der Halterplatte auf die Außenseiten der Einzelplatten ein oder mehrere Klemm- und Fixierelement(e) unmittelbar aufgeschoben ist bzw. sind oder/und die Einzelplatten über angeformte Verrastungselemente miteinander verbunden sind. Das Klemm- und Fixierelement kann einstückig ausgebildet sein. In Ausgestaltung der Erfindung weist das Klemm- und Fixierelement eine mittige Aufnahme auf, deren lichte Weite annähernd der Stärke der Halterplatte entspricht. Vorteilhafterweise sind die seitlichen Begrenzungen der mittigen Aufnahme seitlich auseinander spreizbar. Bei einem bevorzugtem Ausbildungsbeispiel sind auf den Innenseiten der seitlichen Begrenzungen der mittigen Aufnahme Rastnoppen angeordnet, wobei die Einzelplatten entsprechend zugeordnete Verrastungselemente aufweisen.

Es besteht die Möglichkeit, die Einzelplatten mit je einer übereinstimmenden Nut zu versehen, die auf der Unterseite beginnt und in Breite und Länge annähernd der mittigen Aufnahme des Klemm- und Fixierelements entspricht. Die mittige Aufnahme und damit auch die Nut verlaufen annähernd über 50 % der Gesamthöhe des Klemm-und Fixierelements, wobei die Seitenbegrenzungen des Klemm- und Fixierelements nach unten konisch verbreiternd verlaufen können. Beim Aufschieben des Klemm-und Fixierelements entsteht eine Verrastung bzw. Verklemmung mit den Einzelplatten der Halterplatte.

In weiterer Aufgestaltung der Erfindung ist das schaumfähige Material auf die Innenseiten der Einzelplatten jeweils als Teilsegment aufgebracht. Bei einer bevorzugten Ausführung sind die Teilsegmente des schaumfähigen Materials durch ein Filmscharnier miteinander verbunden, wobei eine Einzelplatte mit den zugeordnetem Teilsegment des schaumfähigen Materials nach der Fertigstellung in Funktionsstellung der Halterplatte verschwenkbar ist.

Zweckmäßige weitere Ausgestaltungen der Erfindung sind in den Unteransprüchen aufgezeigt.

Durch die erfindungsgemäße Ausbildung können die Einzelplatten im aufgeklappten Zustand hergestellt und zur Bildung der Funktionsstellung in die erforderliche Bezugsebene geklappt werden. Bei Aufbringung des schaumfähigen Materials in Teilsegmenten auf die Teilplatten der Halterplatte sind die Teilsegmente mit einem Filmscharnier zum Umklappen in die Funktionsstellung versehen.

Ein Ausführungsbeispiel der Erfindung ist in der Zeichnung dargestellt und wird nachfolgend näher beschrieben. Es zeigen:

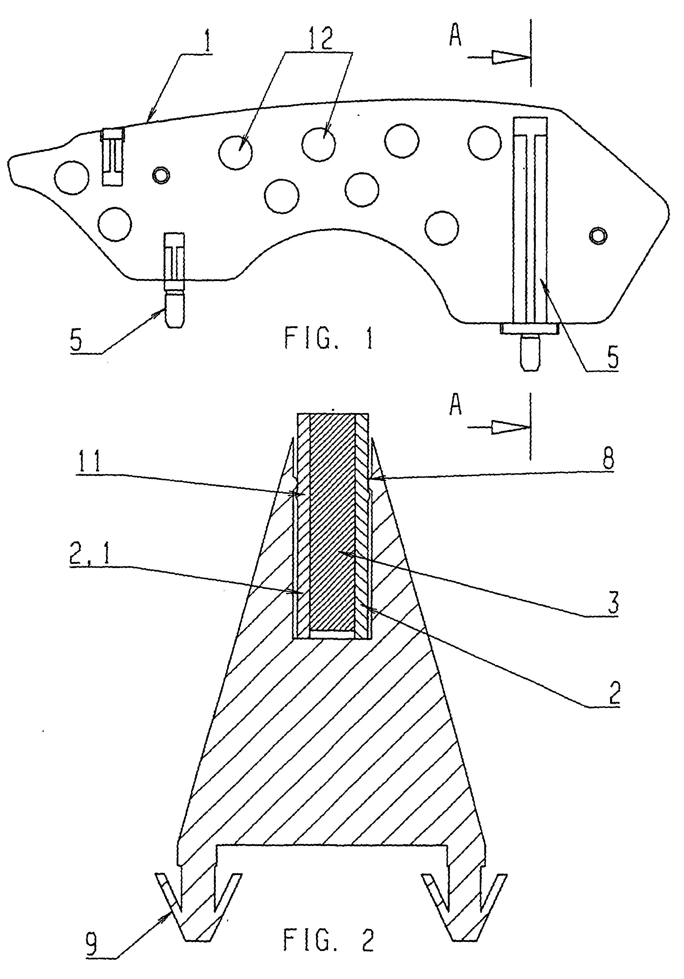

- Fig. 1: eine Seitenansicht einer Halterplatte mit drei zugeordneten Klemm-und Fixierelementen;
- Fig. 2: einen Vertikalschnitt gemäß Linie A - A der Fig. 1;
- Fig. 3: eine schaubildliche Darstellung einer Halterplatte ohne Klemm- und Fixierelemente;
- Fig. 4: eine Seitenansicht eines Klemm- und Fixierelements;
- Fig. 5: eine Draufsicht auf ein Klemm- und Fixierelement und
- Fig. 6: einen Vertikalschnitt durch eine Halterplatte mit Andeutung der Lage vor dem Verschwenken der Teilplatte 2.1.

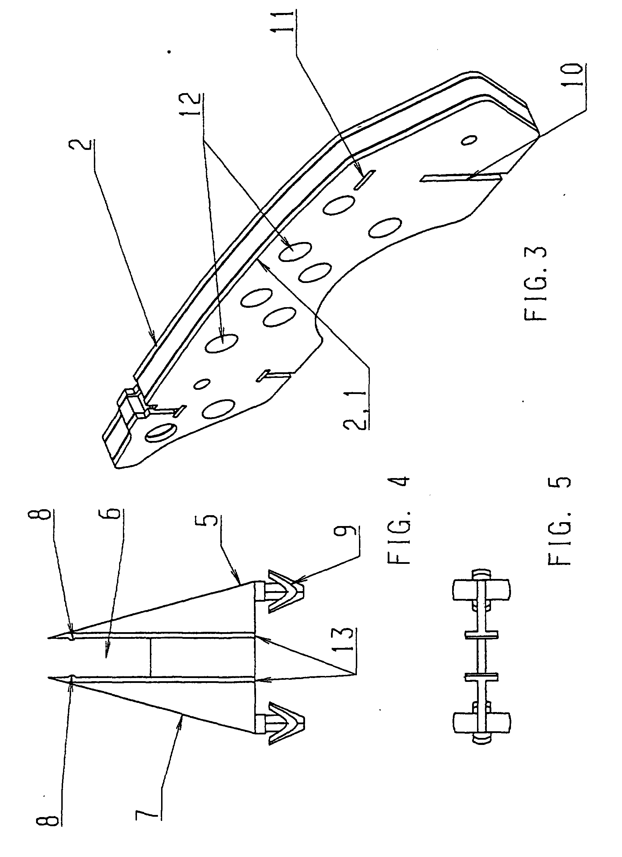

Die Halterplatte 1 weist zwei im Abstand zueinander parallel verlaufende Einzelplatten 2 und 2.1 auf, wobei der so gebildete Zwischenraum durch ein schaumfähiges Material 3 ausgefüllt ist. Zur Bildung der Halterplatte 1 werden die Einzelplatten 2 und 2.1 durch ein einstückiges und aufschiebbares Klemm- und Fixierelement 5 in der vorbestimmten Lage gehaltert. Das Klemm- und Fixierelement 5 besitzt eine mittige Aufnahme 6, deren lichte Breite annähernd der Stärke der Halterplatte 1 entspricht. Das Klemm- und Fixierelement 5 greift beim Aufschieben auf die Halterplatte 1 mit der mittigen Aufnahme 6 in eine entsprechend ausgebildete Nut 10 der Halterplatte 1, wobei die seitlichen Begrenzungen 7 der mittigen Aufnahme 6 seitlich geringfügig auseinander spreizbar sind. Zur Sicherung der richtigen Lage des Klemm- und Fixierelements 5 an der Halterplatte 1 sind auf den Innenseiten der seitlichen Begrenzungen 7 der mittigen Aufnahme 6 des Klemm- und Fixierelements 5 Rastnoppen 8 vorgesehen, denen entsprechend profilierte Verrastungselemente 11 der Einzelplatten 2 und 2.1 zugeordnet sind. Wie aus Fig. 4 ersichtlich, verläuft die mittige Aufnahme 6 annähernd über 50 % der Gesamthöhe des Klemm- und Fixierelements 5. Die Seitenbegrenzungen 7 verbreitern sich konisch nach unten. Zur Erhöhung der Stabilität sind senkrecht verlaufende Verstärkungsrippen 13 angeordnet. Die in den Einzelplatten 2 und 2.1 vorhandenen Durchbrechungen 12 ermöglichen eine Durchströmung eines Lackmediums. Auf der Unterseite des Klemm- und Fixierelements 5 sind auskragende Fixierungsnasen 9 angeordnet.

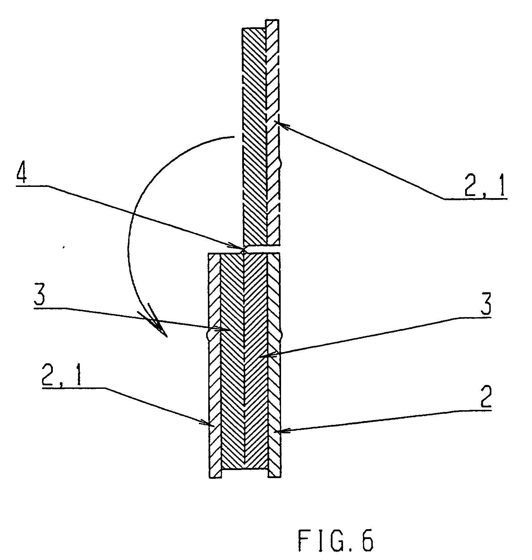

Nach Fig. 6 ist, wie gestrichelt gezeigt, auf die übereinander in einer Ebene stehenden Einzelplatten 2 und 2.1 jeweils ein Teilsegment des schaumfähigen Materials 3 aufgebracht. Über das Filmscharnier 4 der Teilsegmente des schaumfähigen Materials 3 erfolgt eine Verschwenkung um 180° nach unten, so daß auf diese Weise die Halteplatte 1 gebildet ist. Dadurch ist eine deutliche Verringerung der Werkzeugkosten erreicht. Nach der Herstellung des Klemm- und Fixierelements 5 ist eine platzsparende Stapelung möglich.

### Aufstellung der Bezugszeichen:

- 1: Halterplatte
- 2: Einzelplatte
- 2.1: Einzelplatte
- 3: schaumfähiges Material
- 4: Filmscharnier
- 5: Klemm- und Fixierelement
- 6: mittige Aufnahme
- 7: seitliche Begrenzungen von 6
- 8: Rastnoppen
- 9: Fixierungsnasen
- 10: Nut
- 11: Verrastungselemente
- 12: Durchbrechungen
- 13: Verstärkungsrippen

## Patentansprüche

1. Halterplatte mit Mitteln zur Fixierung einer Funktionsstellung der Halterplatte, vorzugsweise zur Fixierung im Innenbereich der Hohlraumstruktur von Kraftfahrzeugen,
- wobei die Halterplatte zwei im Abstand zueinander verlaufende Einzelplatten (2, 2.1) aufweist und der gebildete Hohlraum durch ein schaumfähiges Material (3) ausgefüllt ist,
**dadurch gekennzeichnet, daß**
- auf jede Einzelpatte (2; 2.1) ein Teilsegment des schaumfähigen Materials (3) aufgebracht ist,
- die Teilsegmente durch ein Filmscharnier (4) miteinander verbunden sind, wobei durch Verschwenken um die Achse des Filmscharniers die Halterplatte (1) gebildet wird,
- zur Fixierung der Funktionsstellung der Halterplatte (1) auf die Außenseiten der Einzelplatten ein oder mehrere Klemm- und Fixierelement(e) (5) aufgeschoben ist bzw. sind, und
- jedes Klemm- und Fixierelement (5) mit den Einzelplatten über an diesen angeformte Verrastungselemente (11) miteinander verbunden ist.

2. Halterplatte nach Anspruch 1, **dadurch gekennzeichnet, daß** das Klemm- und Fixierelement (5) einstückig ausgebildet ist.

3. Halterplatte nach Anspruch 1 oder 2, **dadurch gekennzeichnet, daß** das Klemm- und Fixierelement (5) eine mittige Aufnahme (6) aufweist.

4. Halterplatte nach Anspruch 3, **dadurch gekennzeichnet, daß** die lichte Breite der mittigen Aufnahme (6) annähernd der Stärke der Halterplatte (1) entspricht.

5. Halterplatte nach einem der Ansprüche 3 oder 4, **dadurch gekennzeichnet, daß** die seitlichen Begrenzungen (7) der mittigen Aufnahme (6) seitlich auseinander spreizbar sind.

6. Halterplatte nach einem der Ansprüche **3** bis **5, dadurch gekennzeichnet, daß** auf den Innenseiten der seitlichen Begrenzungen (7) der mittigen Aufnahme (6) Rastnoppen (8) angeordnet sind.

7. Halterplatte nach einem der Ansprüche 1 bis 6, **dadurch gekennzeichnet, daß** auf der Unterseite des Klemm- und Fixierelements (5) auskragende Fixierungsnasen (9) angeordnet sind.

8. Halterplatte nach einem der Ansprüche **3** bis 7, **dadurch gekennzeichnet, daß** die mittige Aufnahme (6) annähernd über 50 % der Gesamthöhe des Klemm- und Fixierelements (S) verläuft.

9. Halterplatte nach einem der Ansprüche 1 bis 8, **dadurch gekennzeichnet, daß** die Seitenbegrenzungen (7) des Klemm- und Fixierelements (5) nach unten konisch verbreiternd verlaufen.

10. Halterplatte nach einem der Ansprüche 1 bis 9, **dadurch gekennzeichnet, daß** die Einzelplatten (2; 2.1) je eine übereinstimmend verlaufende Nut (10) aufweisen.

11. Halterplatte nach einem der Ansprüche 1 bis 10, **dadurch gekennzeichnet, daß** die Nut (10) der Einzelplatten (2; 2.1) in Breite und Länge annähernd der mittigen Aufnahme (6) des Klemm- und Fixierelements (5) entspricht.

12. Halterplatte nach einem der Ansprüche **6** bis 11, **dadurch gekennzeichnet, daß** die Verrastungselemente (11) der Einzelplatten (2; 2.1) den Rastnoppen (8) der mittigen Aufnahme (6) entsprechend zugeordnet sind.

13. Halterplatte nach einem der Ansprüche 1 bis 12, **dadurch gekennzeichnet, daß** auf den Außenseiten des Klemm- und Fixierelements (5) Verstärkungsrippen (13) angeordnet sind.

14. Halterplatte nach Anspruch 1, **dadurch gekennzeichnet, daß** eine der Einzelplatten (2) eine zur anderen Einzelplatte (2.1) weisende Abwinklung mit oberen Rasthaken aufweist, an dem eine entsprechende Abbiegung der anderen Einzelplatte (2.1) gehaltert ist.

15. Halterplatte nach einem der Ansprüche 1 bis 14, **dadurch gekennzeichnet, daß** die Einzelplatten (2; 2.1) mehrere Durchbrechungen (12) für die Durchströmung eines Lackiermediums aufweisen.

16. Halterplatte nach einem der Ansprüche 1 bis 15, **gekennzeichnet durch** die Herstellung aus Chemiewerkstoff im Spritzgießverfahren.

17. Halterplatte nach einem der Ansprüche 1 bis 16, **gekennzeichnet durch** die Herstellung im 2 - Komponentenverfahren, wobei zunächst die Einzelplatten (2; 2.1) herstellbar und direkt anschließend die Teilsegmente des schaumfähigen Materials (3) auf die Einzelplatten (2; 2.1) aufgebracht sind.

18. Halterplatte nach einem der Ansprüche 1 bis 17, **dadurch gekennzeichnet, daß** die Einzelplatten (2; 2.1) unterschiedliche Größenabmessungen aufweisen.

19. Halterplatte nach einem der Ansprüche 1 bis 18, **dadurch gekennzeichnet, daß** die Stirnseiten und/oder die Abdeckseiten ganz oder teilweise verschlossen sind.

20. Halterplatte nach einem der Ansprüche 1 bis 19, **dadurch gekennzeichnet, daß** die Einzelplatten (2; 2.1) und das Klemm- und Fixierelement (5) aus unterschiedlichen Materialien hergestellt sind.

21. Halterplatte nach einem der Ansprüche 1 bis 20, **dadurch gekennzeichnet, daß** der Abstand der Einzelplatten (2; 2.1) durch die Stärke des schaumfähigen Materials (3) festlegbar ist.

## Claims

1. Mounting plate with means for fixing a functional setting of the mounting plate, preferably for fixing in the internal region of the cavity structure of motor vehicles,
- wherein the mounting plate comprises two individual plates (2, 2.1) extending at a mutual spacing and the cavity formed is filled by a foamable material (3),
**characterised in that**
- a partial segment of the foamable material (3) is applied to each individual plate (2; 2.1),
- the partial segments are connected together by a film hinge (4), wherein the mounting plate (1) is formed by pivotation about the axis of the film hinge,
- one or more clamping and fixing element(s) (5) is or are pushed onto the outer sides of the individual plates for the fixing of the functional setting of the mounting plate (1) and
- each clamping and fixing element (5) is connected together with the individual plates by way of detent elements (11) integrally formed thereat.

2. Mounting plate according to claim 1, **characterised in that** each clamping and fixing element (5) is of integral construction.

3. Mounting plate according to claim 1 or 2, **characterised in that** the clamping and fixing element (5) has a central receptacle (6).

4. Mounting plate according to claim 3, **characterised in that** the clear width of the central receptacle (6) approximately corresponds with the thickness of the mounting plate (1).

5. Mounting plate according to one of claims 3 and 4, **characterised in that** the lateral boundaries (7) of the central receptacle (6) can be laterally spread apart.

6. Mounting plate according to one of claims 3 to 5, **characterised in that** detent protrusions (8) are arranged on the inner sides of the lateral boundaries (7) of the central receptacle (6).

7. Mounting plate according to one of claims 1 to 6, **characterised in that** protruding fixing lugs (9) are arranged on the underside of the clamping and fixing element (5).

8. Mounting plate according to one of claims 3 to 7, **characterised in that** the central receptacle (6) extends over approximately 50% of the total height of the clamping and fixing element (5).

9. Mounting plate according to one of claims 1 to 8, **characterised in that** the lateral boundaries (7) of the clamping and fixing element (5) extend so as to conically widen in downward direction.

10. Mounting plate according to one of claims 1 to 9, **characterised in that** the individual plates (2; 2.1) each have a correspondingly extending groove; (10).

11. Mounting plate according to one of claims 1 to 10, **characterised in that** the groove (10) of the individual plates (2; 2.1) approximately corresponds in width 'and length with the central receptacle (6) of the clamping and fixing element (5).

12. Mounting plate according to one of claims 6 to 11, **characterised in that** the detent elements (11) of the individual plates (2; 2.1) are correspondingly associated with the detent protrusions (8) of the central receptacle (6).

13. Mounting plate according to one of claims 1 to 12, **characterised in that** reinforcing ribs (13) are arranged on the outer sides of the clamping and fixing element (5).

14. Mounting plate according to claim 1, **characterised in that** one of the individual plates (2) has a bent-over portion, which faces the other individual plate (2.1) and at which a corresponding bent-over portion of the other individual plate (2.1) is held, with upper detent hooks.

15. Mounting plate according to one of claims 1 to 14, **characterised in that** the individual plates (2; 2.1) have several passages (12) for the throughflow of a painting medium.

16. Mounting plate according to one of claims 1 to 15, **characterised by** production from chemical materials in an injection-moulding process.

17. Mounting plate according to one of claims 1 to 16, **characterised by** production in a two-component process, wherein initially the individual plates (2; 2.1) can be produced and the partial segments of the foamable material (3) are applied to the individual plates (2; 2.1) directly subsequently.

18. Mounting plate according to one of claims 1 to 17, **characterised in that** the individual plates (2; 2.1) have different size dimensions.

19. Mounting plate according to one of claims 1 to 18, **characterised in that** the front faces and/or covering faces are entirely or partly enclosed.

20. Mounting plate according to one of claims 1 to 19, **characterised in that** the individual plates (2; 2.1) and the clamping and fixing element (5) are made of different materials.

21. Mounting plate according to one of claims 1 to 20, **characterised in that** the spacing of the individual plates (2; 2.1) can be fixed by the thickness of the foamable material (3).

## Revendications

1. Plaque de fixation comportant des moyens pour bloquer une position fonctionnelle de la plaque de fixation, de préférence pour le blocage dans la zone intérieure d'une structure de cavité de véhicules, la plaque de fixation comportant deux plaques distinctes (2, 2.1) écartées l'une de l'autre et la cavité formée étant remplie avec de la mousse (3),
**caractérisée en ce que**
- sur chaque plaque (2 ; 2.1), on applique un segment partiel de mousse (3),
- les segments partiels sont reliés par un film formant charnière (4) et par basculement autour de l'axe du film formant charnière on constitue la plaque de fixation (1),
- pour bloquer la position fonctionnelle de la plaque de fixation (1) sur les côtés extérieurs des plaques on engage un ou plusieurs éléments de serrage et de blocage (5), et
- chaque élément de serrage et de blocage (5) est relié aux plaques de fixation par un élément d'accrochage (11) formé sur celui-ci.

2. Plaque de fixation selon la revendication 1;
**caractérisée en ce que**
l'élément de serrage et de fixation (5) est en une seule pièce.

3. Plaque de fixation selon l'une quelconque des revendications 1 ou 2,
**caractérisée en ce que**
l'élément de serrage et de blocage (5) comporte un logement central (6).

4. Plaque de fixation selon la revendication 3,
**caractérisée en ce que**
la largeur libre du logement central (6) correspond sensiblement à l'épaisseur de la plaque de fixation (1).

5. Plaque de fixation selon l'une quelconque des revendications 3 ou 4,
**caractérisée en ce que**
les limites latérales (7) du logement central (6) peuvent s'écarter latéralement.

6. Plaque de fixation selon l'une quelconque des revendications 3 à 5,
**caractérisée en ce que**
les faces intérieures des limites latérales (7) du logement central (6) comportent des bossages d'accrochage (8).

7. Plaque de fixation selon l'une quelconque des revendications 1 à 6,
**caractérisée en ce que**
des becs de blocage (9) sont prévus en saillie sur la face inférieure de l'élément de serrage et de blocage (5).

8. Plaque de fixation selon l'une quelconque des revendications 3 à 7,
**caractérisée en ce que**
le logement central (6) s'étend sensiblement sur plus 50 % de la hauteur totale de l'élément de serrage et de blocage (5).

9. Plaque de fixation selon l'une quelconque des revendications 1 à 8,
**caractérisée en ce que**
les limitations latérales (7) de l'élément de serrage et de blocage (5) s'élargissent vers le bas suivant une forme conique.

10. Plaque de fixation selon l'une quelconque des revendications 1 à 9,
**caractérisée en ce que**
les plaques (2 ; 2.1) ont chacune une rainure correspondante (10).

11. Plaque de fixation selon l'une quelconque des revendications 1 à 10,
**caractérisée en ce que**
la rainure (10) des plaques (2 ; 2.1) correspond en largeur et en longueur sensiblement au logement central (6) de l'élément de serrage et de blocage (5).

12. Plaque de fixation selon l'une quelconque des revendications 6 à 11,
**caractérisée en ce que**
les éléments d'accrochage (11) des plaques (2 ; 2.1) sont associés aux bossages d'accrochage (8) du logement central (6).

13. Plaque de fixation selon l'une quelconque des revendications 1 à 12,
**caractérisée en ce que**
les nervures de renforcement (13) sont prévues sur le côté extérieur de l'élément de serrage et de blocage (5).

14. Plaque de fixation selon la revendication 1,
**caractérisée en ce que**
l'une des plaques (2) comporte une partie repliée avec des crochets d'accrochage supérieurs, tournés vers l'autre plaque (2.1) et une partie repliée correspondante de l'autre plaque (2.1) y est accrochée.

15. Plaque de fixation selon l'une quelconque des revendications 1 à 14,
**caractérisée en ce que**
les plaques (2 ; 2.1) comportent plusieurs passages (12) permettant au vernis de traverser.

16. Plaque de fixation selon l'une quelconque des revendications 1 à 15,
**caractérisée par**
la fabrication en matière chimique par injection.

17. Plaque de fixation selon l'une quelconque des revendications 1 à 16,
**caractérisée par**
la fabrication selon un procédé à deux composants selon lequel on réalise tout d'abord les plaques (2 ; 2.1) puis ensuite directement on applique les segments partiels de mousse (3) sur les plaques (2 ; 2.1).

18. Plaque de fixation selon l'une quelconque des revendications 1 à 17,
**caractérisée en ce que**
les plaques (2 ; 2.1) ont des tailles différentes.

19. Plaque de fixation selon l'une quelconque des revendications 1 à 18,
**caractérisée en ce que**
les faces frontales et/ou les côtés de recouvrement sont fermés totalement ou partiellement.

20. Plaque de fixation selon l'une quelconque des revendications 1 à 19,
**caractérisée en ce que**
les plaques (2 ; 2.1) et l'élément de serrage et de blocage (5) sont réalisés en matière différente.

21. Plaque de fixation selon l'une quelconque des revendications 1 à 20,
**caractérisée en ce que**
la distance des plaques (2 ; 2.1) est fixée par l'épaisseur de la mousse (3).
